# EUROPEAN PATENT SPECIFICATION

(11) **EP 4 038 714 B1**
(45) Date of publication and mention of the grant of the patent: **07.06.2023**
(21) Application number: 20811776.2
(22) Date of filing: 17.11.2020
(51) Int. Cl.: H02J 3/46

(54) **METHOD AND MODULE CONTROLLER FOR CONTROLLING A POWER PRODUCING SYSTEM**
VERFAHREN UND MODULSTEUERUNG ZUR STEUERUNG EINES STROMERZEUGUNGSSYSTEMS
PROCÉDÉ ET DISPOSITIF DE COMMANDE DE MODULE PERMETTANT DE COMMANDER UN SYSTÈME DE PRODUCTION D'ÉNERGIE

(30) Priority: 25.11.2019 SE 1951342
(43) Date of publication of application: 10.08.2022
(73) Proprietor: Climeon AB, 164 40 Kista (SE)
(72) Inventor: PETTERSSON, Rickard, 169 51 Solna (SE)
(74) Representative: Bergenstråhle & Partners AB
(86) International application number: PCT/SE2020/051100
(87) International publication number: WO 2021/107834

(56) References cited:
- US-A1- 2014 309 800
- US-A1- 2018 269 689

## Description

### TECHNICAL FIELD

The present invention relates generally to a method and module controller for controlling a power producing system. The present invention also relates to a computer program and a computer program product for performing the method.

### BACKGROUND OF INVENTION

Power producing systems, such as power plants, using at least two power producing modules connected to each other for producing power are commonly used. For example, when the power contribution of each power producing module is relatively small, such as small-scale modularized solutions having a rated output of 20 to 600 kW or when different type of power producing modules are utilized to optimize power output from different available sources for producing power. Such sources for producing power may be renewable energy sources such as for example heat, wind, and hydro but also other energy sources such as combustion of gas or diesel. By connecting several power producing modules, the total amount of generated power can be increased and the output from renewable energy sources can be maximized. The power producing modules may utilize different types of power generators such as gas expansion driven gas turbines or steam turbines. Other power generators may be wind or water turbines or combustion engines of any kind. However, using several interconnected power producing modules comes with a cost, since it will require more computational overhead in order to control and coordinate the power generation of the at least two power producing modules. Today, each power producing module is provided with a dedicated controller, which controls the operation of each power producing module. This is beneficial, especially if the power producing modules are of different types as mentioned above, since the controller is adapted to the power producing modules that it controls.

The drawback with a dedicated controller is as mentioned above the cost. The cost is usually not a major problem when it comes to power plants having power producing modules generating 1 MW or more, but for small power producing modules the cost may be to large for making an investment. These large power producing modules are often standalone solutions specifically designed for a dedicated application.

There are examples where a connection of several smaller power producing modules is more profitable than large standalone solutions. One such example of smaller power producing modules are modules run by heat power. The heat may be generated by waste heat from industrial processes or by natural geological heat sources. Heat power run power producing modules are utilizing the thermodynamic power cycles, such as a Rankine cycle, a Kalina cycle, a Carbon Carrier cycle and/or a Carnot cycle. In these examples a gas or steam turbine is an essential element for generating power. A liquid is heated until it is converted in to gas which enters the turbine to perform work. Typically, the liquid is heated in a heat exchanger to produce dry gas, which exits the heat exchanger from an outlet port and is fed to the turbine. The Rankine cycle is an idealized thermodynamic cycle of a heat engine that converts heat into mechanical work. An Organic Rankine cycle (ORC) is a Rankine cycle using other working fluids than water/steam, in particular organic fluids. In context of the present invention, the term "ORC" is meant as any power generation process capable of converting 50-200 °C heat streams to electricity. Examples of different power producing systems with small power producing modules are described in WO 2012/128 715 and SE 2013 / 051 059, PCT SE 1300 576-4, SE 1400 027-7 and SE 1400 160-6, and WO 2015/112 075 and PCT SE 2015/050 368, and SE 1400 514-4. Examples of controlling a power producing system having at least two power producing modules or sources are described in US2014/309800 and US2018/269689. In US2014/309800 the operation of the power producing modules or sources is carried out by an interface device for each module. In US2018/269689 each module contains a controller for carrying out the operation internally.

Today there is an increasing demand for renewable energy, especially using low temperature heat to harvest energy. It is also an increasing demand for small modular and scalable power plants, i.e. using one or more types of small power producing modules. It is the efficiency of the entire process that determines if it is possible to economically harvest low temperature heat.

Consequently, in view of the above, there is a need for a method and controller that reduces the complexity and cost for an entire power producing system comprising at least two power producing modules.

### SUMMARY OF INVENTION

An object of the present invention is to provide an efficient method for controlling a power producing system.

According to an aspect of the present invention this object is accomplished by a method of controlling a power producing system comprising at least two power producing modules and a module controller for controlling operation of the power producing modules, wherein the module controller comprises a processor. The method comprises, identifying each power producing module connected to the module controller, retrieving a control logic for and associated with each of the identified power producing modules, scheduling a control sequence, determining the order in which the power producing modules are to be controlled by the module controller, allocating processor time to each power producing module in accordance with the scheduled control sequence, and controlling the operation of each power producing module by executing, in the processor, the associated control logic.

In an exemplary embodiment the step of identifying each power producing module may further comprise reading a configuration file stored in the memory of the power producing module.

In another exemplary embodiment the control sequence is scheduled to restart at regular periods. The regular periods may restart at an interval between 25 and 100 ms, preferably once every 50 ms.

In yet another exemplary embodiment the allocation of processor time is determined based on control logic complexity.

In a further exemplary embodiment the module controller may further comprise a safety processor executing a security logic. In such a case the method further comprises, reading, in a memory, the security status of each power producing module, determining that the security status is critical in one of the power producing modules, classifying the critical security status as either an internal status or an external status, and in response thereto sending, from the safety processor, instructions to the processor to terminate operation of all power producing modules if the critical security status is classified as the external status or to terminate operation in the power producing module that generated the critical security status if the critical security status is classified as the internal status.

Another exemplary embodiment of the method comprises, if the critical security status has been classified as the internal status, re-scheduling the control sequence, and re-allocating processor time based on the terminated operation in the power producing module that generated the critical security status classified as the internal status.

According to another aspect of the present invention this object is accomplished by a module controller for controlling operation of power producing modules in a power producing system, wherein the module controller comprises a processor and a memory, configured to store instructions, which when executed by the processor, cause the module controller to, identify each power producing module connected to the module controller, retrieve a control logic for and associated with each of the identified power producing modules, schedule a control sequence, determining the order in which the power producing modules are to be controlled by the module controller, allocate processor time to each power producing module in accordance with the scheduled control sequence, and control the operation of each power producing module by executing, in the processor, the associated control logic.

In an exemplary embodiment the module controller may further be caused to identify each power producing module by reading a configuration file stored in the memory.

In yet another exemplary embodiment the module controller may further be caused to schedule the control sequence to restart at regular periods. The module controller may further be caused to schedule the control sequence to restart at an interval between 25 and 100 ms, preferably once every 50 ms.

In a further exemplary embodiment, the module controller is further caused to allocate the processor time based on control logic complexity.

In another exemplary embodiment the module controller may further comprise a safety processor, which when executing a security logic, causes the module controller to, read the security status in a memory of each power producing module, determine that the security status is critical in one of the power producing modules, classify the critical security status as either an internal status or an external status, and in response thereto send, from the safety processor, instructions to the processor to terminate operation of all power producing modules if the critical security status is classified as the external status or to terminate operation in the power producing module that generated the critical security status if the critical security status is classified as the internal status.

In an exemplary embodiment the module controller for controlling the operation of the power producing modules may, if the critical security status has been classified as the internal status cause the module controller to, re-schedule the control sequence, and re-allocate processor time based on the terminated operation in the power producing module that generated the critical security status classified as the internal status.

According to a further aspect of the present invention this object is accomplished by a computer program comprising computer program code, the computer program code being adapted, if executed on a processor, to implement the method as described above.

According to yet a further aspect this object is accomplished by a computer program product comprising a computer readable storage medium, the computer readable storage medium having the computer program described above.

One advantage with the method of the present invention is that it is possible to reduce the number of controllers associated to each power producing module which increases the overall efficiency of the power producing system and makes it possible to harvest renewable energy also with smaller power producing modules.

Another advantage with the method is that it is possible to introduce plug and play functionality, such as it is possible to connect and disconnected individual power producing units without to shut down the entire power producing system, due to the fact that the safety processor works independently of the processor for the operation of the power producing system.

### BRIEF DESCRIPTION OF THE DRAWINGS

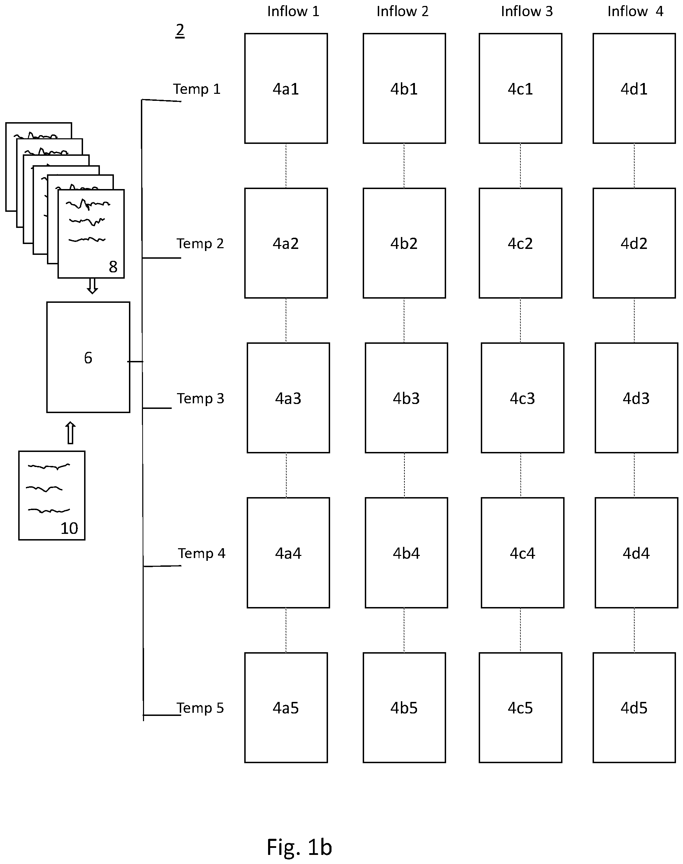

Fig. 1b shows a schematic view of a power producing system, comprising power producing modules and a module controller.
Fig. 1b shows a schematic view of another power producing system, with power producing modules connected both in series and parallel and a module controller.
Fig. 2 shows a schematic view of a module controller for controlling operation of power producing modules.
Fig. 3 shows a schematic view of a power producing module.
Fig. 4 is a flow chart showing the method for controlling a power producing system.
Fig. 5 illustrates an exemplary embodiment of a power producing module.
Fig. 6 shows another exemplary embodiment of a power producing module.

### DESCRIPTION

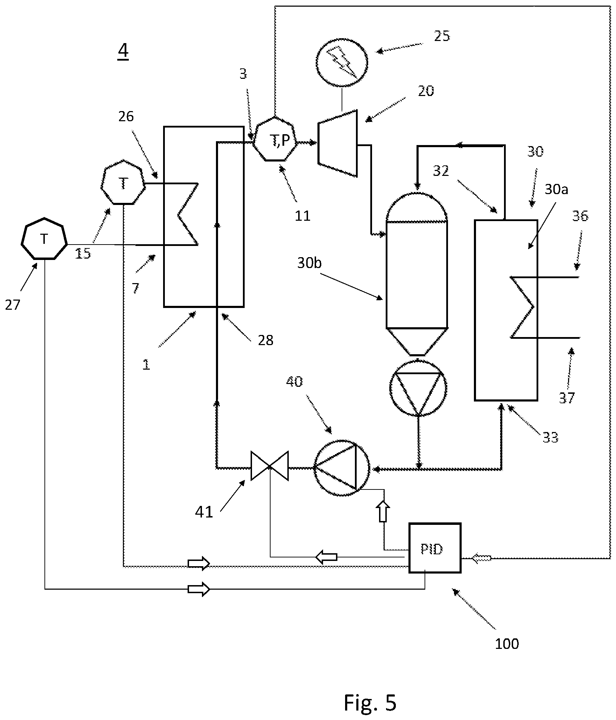

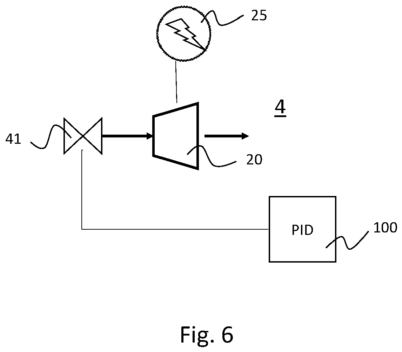

The present invention generally relates to controlling a power producing system comprising two or more power producing modules. In context of the present application a power producing module may be single unit utilizing a power generator such as a steam turbine coupled to a generator, as described further in Fig. 6, or a heat power unit, which utilizes a power generator such as a gas turbine coupled to a generator, as described further in Fig. 5 or a heat power unit group comprising several heat power units. In other embodiments, the power producing modules may also utilize different types of power generators such as for example wind or water turbines or combustion engines of any kind. The main point is that there is a modularity, i.e. that there is a power producing system that comprises two or more power producing modules, the operation of which needs to be controlled.

As mentioned above creating modularity, as such, is not a major problem but it increases the costs since up to now each power producing module requires its own module controller. This is especially true when it comes to harvesting power from low temperature heat. When harvesting power from low temperature heat it is very important to control and tune the process very efficient in order to get any return on investment. Thus, each power producing module needs to be controlled in a dedicated way to optimize the energy extraction of each power producing module, i.e. there is a dedicated control logic for each power producing module.

As will be described below the inventor found that it is possible to use a centralized module controller and still use dedicated control logic for each power producing module. As an option such a centralized module may comprise security logic, which further improves the modularity and enhances plug and play functionality of the power producing system. Thus, with the present invention it is possible to create a simple and scalable design of the power producing system, which is easy to install, and which comes with low maintenance costs. The power producing modules may be configured either serially or parallelly to make optimal use of a heat source. Due to the modular design and the way the operation of the power producing modules is controlled, individual power producing modules may be taken offline for service without having to shut down the entire power producing system or site, maximizing site availability.

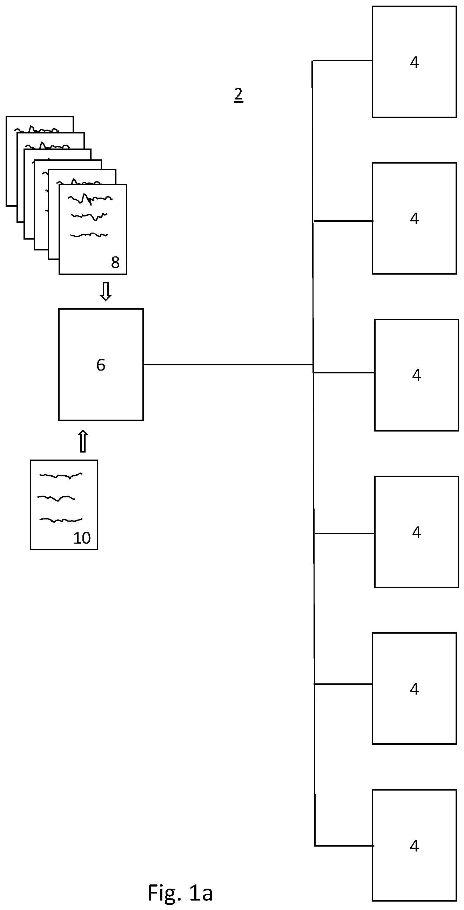

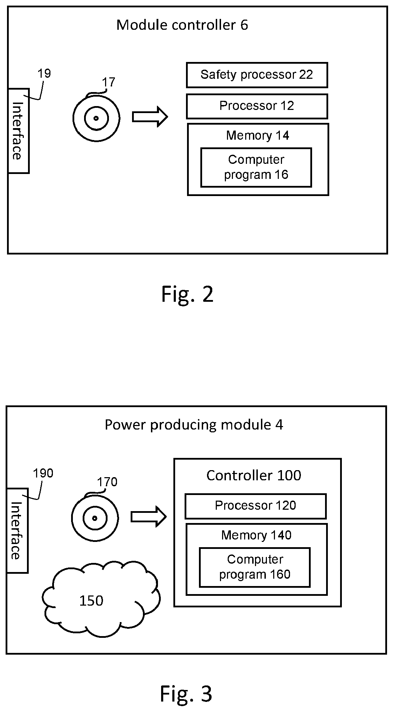

**Fig. 1a** shows a power producing system 2 comprising six power producing modules 4, a controller module 6, control logic 8 and security logic 10. In the power producing system 2 of Fig. 1a the power producing modules 4 are connected in series but may depending on the configuration of the power producing system 2 also be connected in parallel, as described above. The number of power producing modules 4 is at least two but may be extended to ten or more power producing modules 4 depending on the capacity of the module controller 6, which will be described below. The module controller 6 will be closer described in conjunction with Fig. 2 and the power producing module 4 will be closer described in conjunction with Fig. 3.

**Fig. 1b** shows a schematic view of another power producing system harvesting heat from a heat source having a certain available hot fluid flow and temperature, with power producing modules 4 connected both in series and parallel and a module controller 6. This really shows the modularity and flexibility of the system. The system can be configured both in parallel and series. This flexibility makes it possible to optimize the utilization of the available hot source flow and temperature. For example, the power producing system 2 may be a distributed geothermal heat power system utilizing low-temperature heat source such as hot fluid, brine or water, from a geothermal well. The inflow of fluid Inflow 1 from the hot source to the first power producing modules 4a1, 4b1, 4c1, 4d1, in a series may have a first temperature Temp 1 of 120° C. The inflow rate of hot fluid is in this case preferably about 80-120 liters per second divided into four parallel flows, Inflow 1-4. Said Inflow 1-4 is therefore for example approximately 20-30 liters per second or more. The outflow temperature Temp 2 from the first series of power producing modules 4a1, 4b1, 4c1, 4d1 after that the heat energy is harvested is approximately 110° C. Said hot source fluid with temperature Temp 2 is used as input to the second power producing modules 4a2, 4b2, 4c2, 4d2, in the series. Each energy harvesting step over each module reduces the temperature of the hot source fluid with approximately 10 degrees. Thus, Temp 3 may be 100° C, Temp 4 may be 90° C and Temp 5 may be 80° C. The practical aspect of this modularity is that one and the same type of power producing module 4 can be used to expand the power producing system 2 flawlessly and hassle-free. The power producing module 4 is flexible and may be used for different inflows and temperatures without any customization, which makes it perfect for a quick and secure deployment.

For example, if a heat source or well today provide 80 liters per second of 120°C hot water, this may change over time due to for example geothermal activity or industrial processes. Thus, if there is more heat potential than calculated you can simply install more power producing modules 4 in the future if you expand your power producing system. It is also possible to remove and move power producing modules if the well or heat source deliver less heat or flow than calculated.

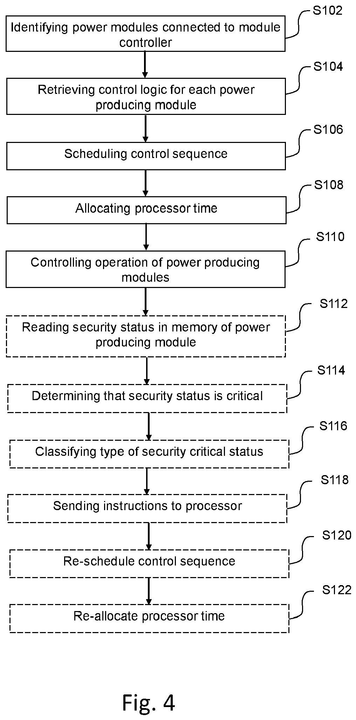

**Fig. 2** shows a schematic view of the module controller 6 for controlling the operation of the power producing modules 4. The module controller 6 is configured to and is operable to perform the method to be described in conjunction with Fig. 4. The module controller 6 comprises a processor 12 and a memory 14. In context of the present application the term processor 12 should be interpreted broadly as processing circuitry, which may comprise one or more programmable processors, application-specific integrated circuits, field programmable gate arrays or combinations of these (not shown) adapted to execute instructions. The memory 14 contains instructions, i.e. a computer program 16, executable by said processing circuitry, whereby the module controller 6 is operative to control the power producing modules 4 connected thereto. The control logic 8 for each power producing module 4 that is connected to the module controller 6 is stored in the memory 14. Each control logic 8 is associated with and dedicated to one power producing module 4. In a preferred embodiment also security logic 10 is stored in the memory 14. When the security logic 10 is executed by a safety processor 22 the security status of each connected power producing module 4 will be checked. As mentioned above the term processor should be interpreted broadly, in context of the present application, as processing circuitry, i.e. also the safety processor 22 may comprise one or more programmable processors, application-specific integrated circuits, field programmable gate arrays or combinations of these adapted to execute instructions.

The module controller 6 further comprises an interface 19, which may be considered to comprise conventional means for communication with other units and devices, such as the connected power producing modules 4.

The computer program 16 may comprise computer readable code means, which when run by the processors 12, 22 causes the module controller 6 to perform the steps described in the method below in conjunction with Fig. 4. The computer program 16 may also be carried by a computer program product connectable to the processor 12. The computer program product may be the memory 14. The memory 14 may be realized as for example a RAM (Random-access memory), ROM (Read-Only Memory) or an EEPROM (Electrical Erasable Programmable ROM). Further, the computer program may be carried by a separate computer-readable medium 17, such as a CD, DVD or flash memory, from which the program could be downloaded into the memory 14. Alternatively, the computer program may be stored on a server or any other entity connected or connectable to the module controller 6 via the interface 19. The computer program may then be downloaded from the server into the memory 14.

Turning now to **Fig. 3****,** the power producing module 4 will be closer described. The power producing module 4 is very schematically shown in Fig. 3 and principally only shows the controlling functions of the power producing module 4. The power producing as such is only shown as a cloud 150 in Fig. 3. Examples of the power producing as such are closer described in conjunction with Fig. 5 and Fig. 6. The controlling functions of the power producing module 4 comprises a controller 100. The controller 100 is configured and operable to communicate with the module controller 6 and control the operation of its power producing module 4 as instructed by the module controller 6. In an exemplary embodiment the controller 100 is a **P**roportional **I**ntegral **D**erivative, PID, regulator, a **P**rogramable **L**ogic **C**ontroller, PLC, a personal computer or any other suitable control system. The controller 100 comprises a processor 120 and a memory 140. In context of the present application the term processor 120 should, as mentioned above, be interpreted broadly as processing circuitry and may comprise one or more programmable processors, application-specific integrated circuits, field programmable gate arrays or combinations of these adapted to execute instructions. The memory 140 contains instructions executable by said processing circuitry.

According to other embodiments, the power producing module 4 may further comprise an interface 190, which may be considered to comprise conventional means for communication with other units or devices, such as the module controller 6. The instructions executable by the processor 120 may be arranged as a computer program 160 stored e.g. in the memory 140. The computer program 160 may comprise computer readable code means, which when run in the processor 120 of the controller 100 causes the controller 100 to control the power producing module 4 according to the instructions received from the module controller 6. The computer program 160 may be carried by a computer program product connectable to the processor 120. The computer program product may be the memory 140. The memory 140 may be realized as for example a RAM (Random-access memory), ROM (Read-Only Memory) or an EEPROM (Electrical Erasable Programmable ROM). Further, the computer program may be carried by a separate computer-readable medium 170, such as a CD, DVD or flash memory, from which the program could be downloaded into the memory 140. Alternatively, the computer program may be stored on a server or any other entity connected or connectable to the power producing module 4 via the interface 190. The computer program may then be downloaded from the server into the memory 140.

Turning now to **Fig. 4** the method performed by the module controller 6 according to the present invention will be closer described by means of a flow chart. The method is applicable when controlling a power producing system 2 comprising two or more power producing modules 4. Compared to the traditional way of controlling power producing modules 4, the full potential of the method is achieved when several power producing modules 4 are connected to the module controller 4. In prior art one dedicated controller is used for each power producing module 4, but with the method according to the present invention it is possible to use only one module controller 6 for controlling the operation of all connected power producing modules 4.

The method starts at step S102, in which the module controller 6 identifies each power producing module 4 connected to the module controller 6. By identifying each power producing module 4, it is possible for the module controller 6 to control each power producing module 4, individually, depending on type, size, configuration etc. of each individual power producing module 4. In one exemplary embodiment the identification of each power producing module 4 comprises reading a configuration file stored in the memory 140 of the power producing module 4. The identification may also be done by reading a unique identification number or serial number stored in the memory 140 of the power producing module 4.

In step S104, the module controller 6, retrieves a control logic 8 for and associated with each of the identified power producing modules 4. The retrieving step S104 may be performed in a variety of ways depending on how the power producing system 2 is configured and on the types of power producing modules 4 that are connected thereto. In one exemplary embodiment the control logic 8 is downloaded to the memory 14 of the module controller 6 when the power producing system 2 is set up and during operation the control logic 8 is retrieved directly from the memory 14 of the module controller 6. In another exemplary embodiment, the module controller 6 may retrieve the control logic 8 from a database which stores the control logic 8 for all different types of power producing modules 4. Such a database may be connected directly to the module controller 6 or may be provided in a cloud solution to which the module controller 6 has access.

In step S106, the module controller 6, schedules a control sequence, i.e. determines the order in which the power producing modules 4 are to be controlled by the module controller 6. The control sequence may be configured in different ways depending on how the system is set up, i.e. depending on if the power producing modules 4 are connected in series, in parallel or any combination thereof. In an exemplary embodiment the control sequence is scheduled to restart at regular periods, balancing the time each power producing module 4 needs to be controlled and the number of power producing modules 4 that are connected to the module controller 6. The regular periods may restart at an interval between 25 and 100 ms, preferably once every 50 ms. In situations where it is difficult to balance the individual processing time needed by each power producing module 4 and the number of power producing modules 4 the module controller 6 may be upgraded with a more powerful processor 12.

In step S108, the module controller 6, allocates processor time to each power producing module 4 in accordance with the scheduled control sequence. The allocation of processor time is determined based on control logic 8 complexity and may thus differ between the different connected power producing modules 4. In step S110, the module controller 6, controls the operation of each power producing module 4 by executing, in the processor 12, the associated control logic 8.

In an exemplary embodiment of the power producing system 2, the module controller 6 may further be provided with an optional safety processor 22, which will enhance plug and play functionality. Thus, it will be possible to connect or disconnect power producing modules 4 during operation of the power producing system 2 logic, i.e. without shutting down the power producing system 2. The safety processor 22 is configured to execute the security logic 10 stored in the memory 14 of the module controller 4.

When the module controller 6 is provided with the safety processor 22, the module controller 6, in step S112, reads the security status of each power producing module 4. The security status is stored in the memory 140 of each power producing module 4, respectively. The module controller 6 checks if the security status is critical in any one of the power producing modules 4. If the security status is critical somewhere in the power producing system 2, the module controller 6 determines, in step S114, that the security status is critical in one of the producing modules 4. In step S116, the module controller 6 classifies the critical security status as either an internal status or an external status. An internal security status is defined as being a security status that only affects the power producing module 4 that generated the security critical status, i.e. an internal error. An external security status is defined as being a security status that affects the whole power producing system 2 and not only the power producing module 4 that generated the security critical status.

In step S118, the module controller 6 sends, in response to that it has been determined that the security status is critical, instructions from the safety processor 22 to the processor 12 to terminate operation of all power producing modules 4 if the critical security status is classified as the external status or to terminate operation in the power producing module 4 that generated the critical security status if the critical security status is classified as the internal status.

If the critical security status has been classified as the internal status, the method may further comprise re-scheduling of the control sequence in step S120 and re-allocating the processor time, in step S122, based on the terminated operation in the power producing module 4 that generated the critical security status classified as the internal status.

Thus, by using a safety processor 22 and determining the type of critical security status it is possible to connect and disconnect individual power producing modules 4 from the power producing system 2 without the need to interrupt the operation of the entire power producing system 2. This gives a very flexible power producing system 2, which is easy to maintain and where power producing modules 4 are readily added or removed. This is accomplished by separating the operational system (processor 12) from the security system (safety processor 22).

Turning now to **Fig. 5** an exemplary embodiment of a power producing module 4 will be described. This is just an example and it should be understood that the method according to the present invention may be used with any type of power producing module 4. Another exemplary embodiment of a power producing module 4 will be described in conjunction with Fig. 6.

Fig. 5 shows a first heat exchanger 1 as part of a power producing module 4. The power producing module 4 is a closed loop thermodynamic system, preferably an **O**rganic **R**ankine **C**ycle, ORC, system. The ORC system comprises a circulating working medium, i.e. the first medium, circulating through a gas turbine 20 coupled to a generator 25 which is configured to generate electric power while expanding the gas which is produced in the first heat exchanger 1 by boiling and overheating the working medium into a dry gas. The boiling and overheating are accomplished by guiding the hot fluid for the heat source, i.e. heat transferring second medium, through the first heat exchanger 1. The gas which has passed through the turbine 20 is condensed in a condenser 30. The condenser 30 comprises a second heat exchanger 30a arranged to cool a stream of working medium with a cooling medium originating for a cold source and a separate condenser tank 30b in which the gaseous working medium condense by cooling the gas with the cold stream of working medium. The second heat exchanger 30a has an inlet 36 and an outlet 37 for the cooling medium as well as an inlet 33 and an outlet 32 for the working medium. In another exemplary, not shown, embodiment the condenser 30 may be a single heat exchanger unit in which the gaseous working medium is directly condensed by indirect or direct contact with the cooling medium.

A regulator 40, 41 conveys the working medium condensed in the condenser 30 to the first heat exchanger 1. The working medium (i.e. the first medium) enters the first heat exchanger 1 via an inlet port 28 of the first medium and exits through an outlet port 3 of the first medium in form of gas. The second medium enters the first heat exchanger 1 via an inlet port 26 of the second medium and then exits via the outlet port 7 of the second medium. A PID regulator 100 is controlling the operation of the regulators 40, 41 based on temperatures measured by sensors 15, 27 measuring the temperature of the second medium flow in and out of the first heat exchanger 1 and also based on the pressure and temperature of the working medium exiting the first heat exchanger 1 measured by the sensor 11.

Turning now to **Fig. 6** another exemplary embodiment of a power producing module 4 will be described. In this embodiment the power producing module 4 comprises a steam turbine 20 through which a medium is circulated. The steam turbine 20 is coupled to a generator 25 which is configured to generate electric power. The flow of medium through the gas turbine is determined by a PID regulator 100 which controls a valve 41. Thus, the power producing module 4 in Fig. 6 is one very simple module. The point is that the method of the present invention may be implemented using different types of power producing modules for building up a power producing system 2. The modularity of the power producing system 2 may have several levels, i.e. the whole power producing system 2 of Fig. 1a or Fig. 1b may also be seen as one power producing module 4 and could be connected to other such "large" power producing modules in order to harvest even more energy from the available energy sources. Thus, the method according the present is very flexible and scalable and may be implemented in wide variety of power producing systems.

## Claims

1. A method of controlling a power producing system (2) comprising at least two power producing modules (4) and a module controller (6) for controlling operation of the power producing modules (4), wherein the module controller (6) comprises a processor (12), said method comprises:
- identifying (S102) each power producing module (4) connected to the module controller (6),
- retrieving (S104) a control logic (8) for and associated with each of the identified power producing modules (4),
- scheduling (S106) a control sequence, determining the order in which the power producing modules (4) are to be controlled by the module controller (6),
- allocating (S108) processor time to each power producing module (4) in accordance with the scheduled control sequence, and
- controlling (S110) the operation of each power producing module (4) by executing, in the processor (12), the associated control logic (8).

2. The method according to claim 1, wherein the step of identifying (S102) each power producing module (4) comprises reading a configuration file stored in the memory (140) of the power producing module (4).

3. The method according to claim 1 or 2, wherein the control sequence is scheduled to restart at regular periods.

4. The method according to claim 3, wherein the regular periods restart at an interval between 25 and 100 ms, preferably once every 50 ms.

5. The method according to any of the preceding claims, wherein the allocation (S108) of processor time is determined based on control logic (8) complexity.

6. The method according to any one of the preceding claims, wherein the module controller (6) further comprises a safety processor (22) executing a security logic (10), the method further comprises:
- reading (S112), in a memory (140), the security status of each power producing module (4),
- determining (S114) that the security status is critical in one of the power producing modules (4),
- classifying (S116) the critical security status as either an internal status or an external status, and in response thereto
- sending (S118), from the safety processor (22), instructions to the processor (12) to terminate operation of all power producing modules (4) if the critical security status is classified as the external status or to terminate operation in the power producing module (4) that generated the critical security status if the critical security status is classified as the internal status.

7. The method according to claim 6, further comprising, if the critical security status has been classified as the internal status:
- re-scheduling (S120) the control sequence, and
- re-allocating (S122) processor time based on the terminated operation in the power producing module (4) that generated the critical security status classified as the internal status.

8. A module controller (6) for controlling operation of at least two power producing modules (4) in a power producing system (2), wherein the module controller (6) comprises a processor (12) and a memory (14), configured to store instructions (16), which when executed by the processor (12), cause the module controller (6) to:
- identify each power producing module (4) connected to the module controller (6),
- retrieve a control logic (8) for and associated with each of the identified power producing modules (4),
- schedule a control sequence, determining the order in which the power producing modules (4) are to be controlled by the module controller (6),
- allocate processor time to each power producing module (4) in accordance with the scheduled control sequence, and
- control the operation of each power producing module (4) by executing, in the processor (12), the associated control logic (8).

9. The module controller (6) for controlling operation of power producing modules (4) according to claim 8, wherein the module controller (6) is further caused to identify each power producing module (4) by reading a configuration file stored in the memory (14).

10. The module controller (6) for controlling operation of power producing modules (4) according to claim 8 or 9, wherein the module controller (6) is further caused to schedule the control sequence to restart at regular periods.

11. The module controller (6) for controlling operation of power producing modules (4) according to claim 10, wherein the module controller (6) is further caused to schedule the control sequence to restart at an interval between 25 and 100 ms, preferably once every 50 ms.

12. The module controller (6) for controlling operation of power producing modules (4) according to any of claims 8 to 11, wherein the module controller (6) is further caused to allocate the processor time based on control logic (8) complexity.

13. The module controller (6) for controlling operation of power producing modules (4) according to any of claims 8 to 12, wherein the module controller (6) further comprises a safety processor (22), which when executing a security logic (10), causes the module controller (6) to:
- read the security status in a memory (140) of each power producing module (4),
- determine that the security status is critical in one of the power producing modules (4),
- classify the critical security status as either an internal status or an external status, and in response thereto
- send, from the safety processor (22), instructions to the processor (12) to terminate operation of all power producing modules (4) if the critical security status is classified as the external status or to terminate operation in the power producing module (4) that generated the critical security status if the critical security status is classified as the internal status.

14. The module controller (6) for controlling operation of power producing modules (4) according to claim 13, in which, if the critical security status has been classified as the internal status causes the module controller (6) to:
- re-schedule the control sequence, and
- re-allocate processor time based on the terminated operation in the power producing module (4) that generated the critical security status classified as the internal status.

15. A computer program (16) comprising computer program code, the computer program code being adapted, if executed on a processor (12), to implement the method according to any one of the claims 1 to 7.

16. A computer program product comprising a computer readable storage medium (17), the computer readable storage medium having a computer program (16) according to claim 15.

## Patentansprüche

1. Verfahren zum Steuern eines Stromerzeugungssystems (2), das mindestens zwei Stromerzeugungsmodule (4) und eine Modulsteuereinheit (6) zum Steuern des Betriebs der Stromerzeugungsmodule (4) umfasst, wobei die Modulsteuereinheit (6) einen Prozessor umfasst (12), wobei das Verfahren umfasst:
- Identifizieren (S102) jedes Stromerzeugungsmoduls (4), das mit der Modulsteuereinheit (6) verbunden ist,
- Abrufen (S104) einer Steuerlogik (8) für und zugehörig zu jedem der identifizierten Stromerzeugungsmodule (4),
- Planen (S106) einer Steuersequenz, die die Reihenfolge bestimmt, in der die Stromerzeugungsmodule (4) von der Modulsteuereinheit (6) gesteuert werden sollen,
- Zuweisen (S108) von Prozessorzeit zu jedem Stromerzeugungsmodul (4) gemäß der geplanten Steuersequenz, und
- Steuern (S110) des Betriebs jedes Stromerzeugungsmoduls (4) durch Ausführen der zugehörigen Steuerlogik (8) im Prozessor (12).

2. Verfahren nach Anspruch 1, wobei der Schritt des Identifizierens (S102) jedes Stromerzeugungsmoduls (4) das Lesen einer Konfigurationsdatei umfasst, die im Speicher (140) des Stromerzeugungsmoduls (4) gespeichert ist.

3. Verfahren nach Anspruch 1 oder 2, wobei die Steuersequenz so geplant ist, dass sie in regelmäßigen Abständen neu startet.

4. Verfahren nach Anspruch 3, wobei die regelmäßigen Abstände in einem Intervall zwischen 25 und 100 ms, vorzugsweise einmal alle 50 ms, neu starten.

5. Verfahren nach einem der vorstehenden Ansprüche, wobei die Zuweisung (S108) von Prozessorzeit basierend auf der Komplexität der Steuerlogik (8) bestimmt wird.

6. Verfahren nach einem der vorstehenden Ansprüche, wobei die Modulsteuereinheit (6) weiter einen Sicherheitsprozessor (22) umfasst, der eine Sicherheitslogik (10) ausführt, wobei das Verfahren weiter umfasst:
- Lesen (S112), in einem Speicher (140), des Sicherheitsstatus jedes Stromerzeugungsmoduls (4),
- Bestimmen (S114), dass der Sicherheitsstatus in einem der Stromerzeugungsmodule (4) kritisch ist,
- Klassifizieren (S116) des kritischen Sicherheitsstatus entweder als internen Status oder als externen Status und als Reaktion darauf
- Senden (S118) von Anweisungen vom Sicherheitsprozessor (22) an den Prozessor (12), um den Betrieb aller Stromerzeugungsmodule (4) zu beenden, falls der kritische Sicherheitszustand als externer Zustand klassifiziert wird, oder um den Betrieb im Stromerzeugungsmodul (4), das den kritischen Sicherheitszustand erzeugt hat, zu beenden, falls der kritische Sicherheitszustand als interner Zustand klassifiziert wird.

7. Verfahren nach Anspruch 6, weiter umfassend, falls der kritische Sicherheitsstatus als interner Status klassifiziert wurde:
- Neuplanen (S120) der Steuersequenz, und
- Neuzuweisen (S122) von Prozessorzeit basierend auf dem beendeten Betrieb im Stromerzeugungsmodul (4), das den als internen Status klassifizierten kritischen Sicherheitsstatus erzeugt hat.

8. Modulsteuereinheit (6) zum Steuern des Betriebs von mindestens zwei Stromerzeugungsmodulen (4) in einem Stromerzeugungssystem (2), wobei die Modulsteuereinheit (6) einen Prozessor (12) und einen Speicher (14) umfasst, der dazu konfiguriert ist, Speicherbefehle (16) zu speichern, die, wenn sie vom Prozessor (12) ausgeführt werden, die Modulsteuereinheit (6) veranlassen:
- jedes Stromerzeugungsmodul (4) zu identifizieren, das mit der Modulsteuereinheit (6) verbunden ist,
- eine Steuerlogik (8) für und zugehörig zu jedem der identifizierten Stromerzeugungsmodule (4) abzurufen,
- eine Steuersequenz zu planen, die die Reihenfolge bestimmt, in der die Stromerzeugungsmodule (4) von der Modulsteuereinheit (6) gesteuert werden sollen,
- jedem Stromerzeugungsmodul (4) Prozessorzeit gemäß der geplanten Steuersequenz zuzuweisen, und
- den Betrieb jedes Stromerzeugungsmoduls (4) durch Ausführen der zugehörigen Steuerlogik (8) im Prozessor (12) zu steuern.

9. Modulsteuereinheit (6) zum Steuern des Betriebs von Stromerzeugungsmodulen (4) nach Anspruch 8, wobei die Modulsteuereinheit (6) weiter veranlasst wird, jedes Stromerzeugungsmodul (4) durch Lesen einer im Speicher (14) gespeicherten Konfigurationsdatei zu identifizieren.

10. Modulsteuereinheit (6) zum Steuern des Betriebs von Stromerzeugungsmodulen (4) nach Anspruch 8 oder 9, wobei die Modulsteuereinheit (6) weiter veranlasst wird, die Steuersequenz so zu planen, dass sie in regelmäßigen Abständen neu startet.

11. Modulsteuereinheit (6) zum Steuern des Betriebs von Stromerzeugungsmodulen (4) nach Anspruch 10, wobei die Modulsteuereinheit (6) weiter veranlasst wird, die Steuersequenz so zu planen, dass sie in einem Intervall zwischen 25 und 100 ms, vorzugsweise einmal alle 50 ms, neu startet.

12. Modulsteuereinheit (6) zum Steuern des Betriebs von Stromerzeugungsmodulen (4) nach einem der Ansprüche 8 bis 11, wobei die Modulsteuereinheit (6) weiter veranlasst wird, die Prozessorzeit basierend auf der Komplexität der Steuerlogik (8) zuzuweisen.

13. Modulsteuereinheit (6) zum Steuern des Betriebs von Stromerzeugungsmodulen (4) nach einem der Ansprüche 8 bis 12, wobei die Modulsteuereinheit (6) weiter einen Sicherheitsprozessor (22) umfasst, der beim Ausführen einer Sicherheitslogik (10) die Modulsteuereinheit (6) veranlasst:
- den Sicherheitsstatus in einem Speicher (140) jedes Stromerzeugungsmoduls (4) zu lesen,
- zu bestimmen, dass der Sicherheitsstatus in einem der Stromerzeugungsmodule (4) kritisch ist,
- den kritischen Sicherheitsstatus entweder als internen Status oder als externen Status zu klassifizieren und als Reaktion darauf
- vom Sicherheitsprozessor (22) Anweisungen an den Prozessor (12) zu senden, um den Betrieb aller Stromerzeugungsmodule (4) zu beenden, falls der kritische Sicherheitszustand als externer Zustand klassifiziert wird, oder den Betrieb im Stromerzeugungsmodul (4), das den kritischen Sicherheitsstatus erzeugt hat, zu beenden, falls der kritische Sicherheitsstatus als interner Status eingestuft wird.

14. Modulsteuereinheit (6) zum Steuern des Betriebs von Stromerzeugungsmodulen (4) nach Anspruch 13, wobei, falls der kritische Sicherheitsstatus als interner Status klassifiziert wurde, die Modulsteuereinheit (6) veranlasst wird:
- die Steuersequenz neu zu planen und
- Prozessorzeit basierend auf dem beendeten Betrieb im Stromerzeugungsmodul (4), das den als internen Status klassifizierten kritischen Sicherheitsstatus erzeugt hat, neu zuzuweisen.

15. Computerprogramm (16), das einen Computerprogrammcode umfasst, wobei der Computerprogrammcode dazu angepasst ist, falls er auf einem Prozessor (12) ausgeführt wird, das Verfahren nach einem der Ansprüche 1 bis 7 zu implementieren.

16. Computerprogrammprodukt, das ein computerlesbares Speichermedium (17) umfasst, wobei das computerlesbare Speichermedium ein Computerprogramm (16) nach Anspruch 15 aufweist.

## Revendications

1. Procédé de commande d'un système de production d'énergie (2) comprenant au moins deux modules de production d'énergie (4) et un dispositif de commande de module (6) pour commander le fonctionnement des modules de production d'énergie (4), dans lequel le dispositif de commande de module (6) comprend un processeur (12), ledit procédé comprenant les étapes consistant à :
- identifier (S102) chaque module de production d'énergie (4) connecté au dispositif de commande de module (6),
- récupérer (S104) une logique de commande (8) pour et associée à chacun des modules de production d'énergie identifiés (4),
- programmer (S106) une séquence de commande, déterminant l'ordre dans lequel les modules de production d'énergie (4) doivent être commandés par le dispositif de commande de module (6),
- allouer (S108) du temps processeur à chaque module de production d'énergie (4) conformément à la séquence de commande planifiée, et
- commander (S110) le fonctionnement de chaque module de production d'énergie (4) en exécutant, dans le processeur (12), la logique de commande associée (8).

2. Procédé selon la revendication 1, dans lequel l'étape d'identification (S102) de chaque module de production d'énergie (4) comprend la lecture d'un fichier de configuration stocké dans la mémoire (140) du module de production d'énergie (4).

3. Procédé selon la revendication 1 ou 2, dans lequel la séquence de commande est programmée pour redémarrer à des périodes régulières.

4. Procédé selon la revendication 3, dans lequel les périodes régulières redémarrent à un intervalle compris entre 25 et 100 ms, de préférence une fois toutes les 50 ms.

5. Procédé selon l'une quelconque des revendications précédentes, dans lequel l'allocation (S108) du temps processeur est déterminée sur la base de la complexité de la logique de commande (8).

6. Procédé selon l'une quelconque des revendications précédentes, dans lequel le dispositif de commande de module (6) comprend en outre un processeur de sécurité (22) exécutant une logique de sécurité (10), le procédé comprenant en outre les étapes consistant à :
- lire (S112), dans une mémoire (140), l'état de sécurité de chaque module de production d'énergie (4),
- déterminer (S114) que l'état de sécurité est critique dans l'un des modules de production d'énergie (4),
- classer (S116) l'état de sécurité critique comme soit un état interne, soit un état externe, et y répondre
- envoyer (S118), depuis le processeur de sécurité (22), des instructions au processeur (12) pour mettre fin au fonctionnement de tous les modules de production d'énergie (4) si l'état de sécurité critique est classé comme état externe ou pour mettre fin au fonctionnement dans le module de production d'énergie (4) qui a généré l'état de sécurité critique si l'état de sécurité critique est classé comme état interne.

7. Procédé selon la revendication 6, comprenant en outre, si l'état de sécurité critique a été classé comme état interne, les étapes consistant à :
- reprogrammer (S120) la séquence de commande, et
- réattribuer (S122) le temps processeur sur la base de l'opération terminée dans le module de production d'énergie (4) qui a généré l'état de sécurité critique classé comme état interne.

8. Dispositif de commande de module (6) pour commander le fonctionnement d'au moins deux modules de production d'énergie (4) dans un système de production d'énergie (2), dans lequel le dispositif de commande de module (6) comprend un processeur (12) et une mémoire (14), configurés pour stocker des instructions (16) qui, lorsqu'elles sont exécutées par le processeur (12), amènent le dispositif de commande de module (6) à :
- identifier chaque module de production d'énergie (4) connecté au dispositif de commande de module (6),
- récupérer une logique de commande (8) pour et associée à chacun des modules de production d'énergie identifiés (4),
- programmer une séquence de commande, déterminant l'ordre dans lequel les modules de production d'énergie (4) doivent être commandés par le dispositif de commande de module (6),
- allouer du temps processeur à chaque module de production d'énergie (4) conformément à la séquence de commande planifiée, et
- commander le fonctionnement de chaque module de production d'énergie (4) en exécutant, dans le processeur (12), la logique de commande associée (8).

9. Dispositif de commande de module (6) pour commander le fonctionnement de modules de production d'énergie (4) selon la revendication 8, dans lequel le dispositif de commande de module (6) est en outre amené à identifier chaque module de production d'énergie (4) en lisant un fichier de configuration stocké dans la mémoire (14).

10. Dispositif de commande de module (6) pour commander le fonctionnement de modules de production d'énergie (4) selon la revendication 8 ou 9, dans lequel le dispositif de commande de module (6) est en outre amené à programmer la séquence de commande pour qu'elle redémarre à des périodes régulières.

11. Dispositif de commande de module (6) pour commander le fonctionnement de modules de production d'énergie (4) selon la revendication 10, dans lequel le dispositif de commande de module (6) est en outre amené à programmer la séquence de commande pour qu'elle redémarre à un intervalle entre 25 et 100 ms, de préférence une fois toutes les 50 ms.

12. Dispositif de commande de module (6) pour commander le fonctionnement de modules de production d'énergie (4) selon l'une quelconque des revendications 8 à 11, dans lequel le dispositif de commande de module (6) est en outre amené à allouer le temps processeur sur la base de la complexité de la logique de commande (8).

13. Dispositif de commande de module (6) pour commander le fonctionnement de modules de production d'énergie (4) selon l'une quelconque des revendications 8 à 12, dans lequel le dispositif de commande de module (6) comprend en outre un processeur de sécurité (22), qui lors de l'exécution d'une logique de sécurité (10), amène le dispositif de commande de module (6) à :
- lire l'état de sécurité dans une mémoire (140) de chaque module de production d'énergie (4),
- déterminer que l'état de sécurité est critique dans l'un des modules de production d'énergie (4),
- classer l'état de sécurité critique comme un état interne ou un état externe, et en réponse à celui-ci
- envoyer, depuis le processeur de sécurité (22), des instructions au processeur (12) pour mettre fin au fonctionnement de tous les modules de production d'énergie (4) si l'état de sécurité critique est classé comme l'état externe ou pour mettre fin au fonctionnement dans le module de production d'énergie (4) qui a généré l'état de sécurité critique si l'état de sécurité critique est classé comme l'état interne.

14. Dispositif de commande de module (6) pour commander le fonctionnement de modules de production d'énergie (4) selon la revendication 13, dans lequel, si l'état de sécurité critique a été classé comme l'état interne, le dispositif de commande de module (6) doit :
- reprogrammer la séquence de commande, et
- réattribuer le temps processeur sur la base de l'opération terminée dans le module de production d'énergie (4) qui a généré l'état de sécurité critique classé comme l'état interne.

15. Programme informatique (16) comprenant un code de programme informatique, le code de programme informatique étant adapté, s'il est exécuté sur un processeur (12), pour mettre en oeuvre le procédé selon l'une quelconque des revendications 1 à 7.

16. Produit de programme informatique comprenant un support de stockage lisible par ordinateur (17), le support de stockage lisible par ordinateur présentant un programme informatique (16) selon la revendication 15.
